# EUROPEAN PATENT SPECIFICATION

(11) **EP 0 629 952 B1**
(45) Date of publication and mention of the grant of the patent: **01.09.1999**
(21) Application number: 93830263.5
(22) Date of filing: 16.06.1993
(51) Int. Cl.: G06F 12/06

(54) **Variable interleaving level memory and related configuration unit**
Speicher mit variabeler Verschachtelungshöhe und verwandte Konfigurationseinheit
Mémoire avec niveau d'entrelacement variable et unité de configuration apparentée

(43) Date of publication of application: 21.12.1994
(73) Proprietor: Bull HN Information Systems Italia S.p.A., 20010 Pregnana Milanese (Milano) (IT)
(72) Inventor: Grassi, Antonio, I-22060 Carimate (Como) (IT); Zanzottera, Daniele, I-20020 Busto Garolfo (Milan) (IT)
(74) Representative: Pezzoli, Ennio

(56) References cited:
- EP-A- 0 332 911
- EP-A- 0 473 275
- US-A- 5 129 069
- IBM TECHNICAL DISCLOSURE BULLETIN, vol. 30, no. 11, April 1988, NEW YORK, US; pages 158 - 161 'Selectable Memory Card Interleave Scheme'
- COMPUTER DESIGN, vol. 15, no. 24, November 1985, WINCHESTER, US; pages 93 - 100 J.GUSTAFSON ET AL 'Memory-Mapped VLSI and Dynamic Interleave Improve Performance'

## Description

This invention relates to a memory having variable level of interleaving and related configurator.

It is known that in modern data processing systems, the working storage unit constitutes a "bottleneck" limitation to the system.

In fact, while the various processors can operate with very short operation cycles on the order of tens of nsec, the working stores currently in use, which are of the DRAM type for cost reasons, are inherently slower, and the read/write time may be on the order of hundreds of nsec.

Each storage cycle requires a selection operation for the memory location to be read or written, which is the complexer and slower, the greater is the size or capacity of the memory.

To obviate this limitation, memories of the so-called interleaved type have long been proposed which comprise a plurality of discrete and independently addressable storage modules.

Thus, several modules may be concurrently activated at one time for read and/or write operations.

In practice, since the data addressing and transfer operation is generally carried out through a single communication channel or bus shared by different processors and storage modules, the memory access operations do not take place quite simultaneously but rather in succession.

However, the read/write cycles overlap in time to a large extent.

The principle underlying interleaved memories is that of the local and sequential nature of data and instructions.

In general, when carrying out a process, and hence reading instructions or reading/writing data, the information utilized is identified by successive addresses.

Thus, if successive addresses point to different storage modules, the access to the various modules may take place in time overlap.

For example, in the simplest instance of a two-way interleaved memory comprising two modules, the bit of least weight in an address, which alternately defines even and odd number addresses, may be used to select, according to its level, either of the modules, which are thus assigned to storing even and odd address information, respectively.

Interleaving need not be limited to two storage modules, and a number N of address bits of least weight allow two storage modules to be selected in a simple, quick and repetitive manner.

Bits of least weight in an address mean here those bits of an address which identify the information unit which is read or written to/from a memory by one read/write operation.

This unit or entry may comprise one or more bytes, usually a number of bytes equal to a power of 2.

In general, the information unit identified by an address is the byte.

Accordingly, the address bits which identify the byte within the information unit being read or written, are used for addressing neither the memory nor its modules.

Memories of the interleaved kind can only be implemented in an easy manner when all the modules have the same capacity and are equal in number to a power of two.

The level or degree of interleaving depends on the number of the modules: when this number is 2, the interleaving level or degree is 2, when it is 4, the interleaving is to a degree of 4, and so forth.

In systems wherein the memory can be expanded and the number of the installed modules may be varied to meet the user's demands, and in relation to foreseeable technological developments, the various modules may have different capacities between modules (in general, a multiple of a basic capacity), the module interleaving, based on a module selection carried out with the bits of least weight, is not feasible, and the memory is set up as a stack of modules, each module being addressed by addresses of ever increasing weight, through a module selection which is carried out using the bits of greatest address weight.

At most, the various modules are viewed as being composed of a plurality of blocks having basic capacities, and the various blocks are disposed in increasing address order such that, in the order, blocks belonging to different modules will follow one another.

This is called high interleaving to distinguish it from proper interleaving as based on the bits of least weight, also referred to as low interleaving, or plainly interleaving.

In this way, advantage can be taken of the location of information for which data and instructions are generally identified by addresses pointing to different storage areas, and in the event of several concurrent processes, the data and instructions areas used by the various processes are usually different, and hence allocated to different storage blocks.

Apparently in these structures, the addressing sequence criterion cannot be utilized.

Memories comprising several modules are instead desirable which can, irrespective of the number of the modules and their capacity, provide for (low) interleaving structures and make best use, even with variable storage configurations, of the number of modules installed to yield interleaving of the highest possible level and the largest possible storage capacity.

These results are obtained by the variable interleaving level memory and associated configurator of the present invention wherewith, in the instance of a memory consisting of a plurality of independently addressable modules provided in any number and with different capacities that are multiples of a basic capacity, there is associated a means of recognizing the number N of installed modules and their capacity C. Also associated with the memory is a configuration logic, set up by information about the number and capacity of the modules installed, which receives a predetermined number of bits of greatest and least weight of a memory address, and responds to the bits received by outputting a module selection code and an address bit selection code for selection of bits to be used in addressing within the module, or even directly some bits for addressing within the module.

Preferably, the formatting logic comprises a read/write memory of adequate capacity.

This logic is highly flexible in that it not only allows the highest degree of interleaving to be adopted for the actual configuration of the memory installed, but also freedom to choose either of the high or low interleaving types, to accommodate varying requirements of the processes being carried out.

In fact, with some process types, a high interleaving may show to be more advantageous than a low interleaving, although in most cases the contrary is true.

According to a further aspect of this invention, to minimize the storage capacity of the configuration logic, this comprises a plurality of registers, each dedicated for a specific (low) level of interleaving from all the possible ones for the various memory configurations, each adapted to store a selection code of an associated module at its level of interleaving.

In this case, the read/write memory of the configuration logic is only input the most significant address bits and outputs, in accord with the input bits, a binary signal indicating the type of interleaving to be used and a code which defines the module to be used (high interleaving) or the interleaving level (low interleaving), according to interleaving type.

It also generates a second code representing the bits of greatest weight to be used for module addressing, or, with equivalent result, a second control/modification code of the bits of greatest weight to be used for module addressing.

The code indicating the level of interleaving, together with the bits of least weight, allows one of the various registers to be selected for reading the module selection code contained therein and thereby effecting the module selection.

According to a further aspect of this invention, the memory is made up of boards, each consisting of two mutually associated modules, and the registers provided for storing the module selection code store a board or module pair selection code, the selection between the two associated modules on the board being effected by the address bit of least weight.

Thus, the number of the registers required can be reduced.

The features and advantages of this invention will become apparent from the following description of a preferred embodiment thereof and the accompanying drawings, in which:
Figure 1 shows, in diagramatic block form, a variable interleaving level memory embodying this invention;
Figure 2 shows a memory address format for the memory in Figure 1;
Figures 3 to 9 show diagramatically some of the various possible configurations of a variable interleaving level memory which can be implemented in the memory of Figure 1 according to the number of modules installed and to their capacity;
Figure 10 shows a preferred embodiment of a configurator for the memory in Figure 1;
Figure 11 depicts a memory wherein the modules are arranged in pairs, with each pair carried on a single board;
Figure 12 shows a modified embodiment of the configurator for a memory comprising paired modules;
Figure 13 shows a further modified embodiment of the configurator for a memory comprising paired modules.

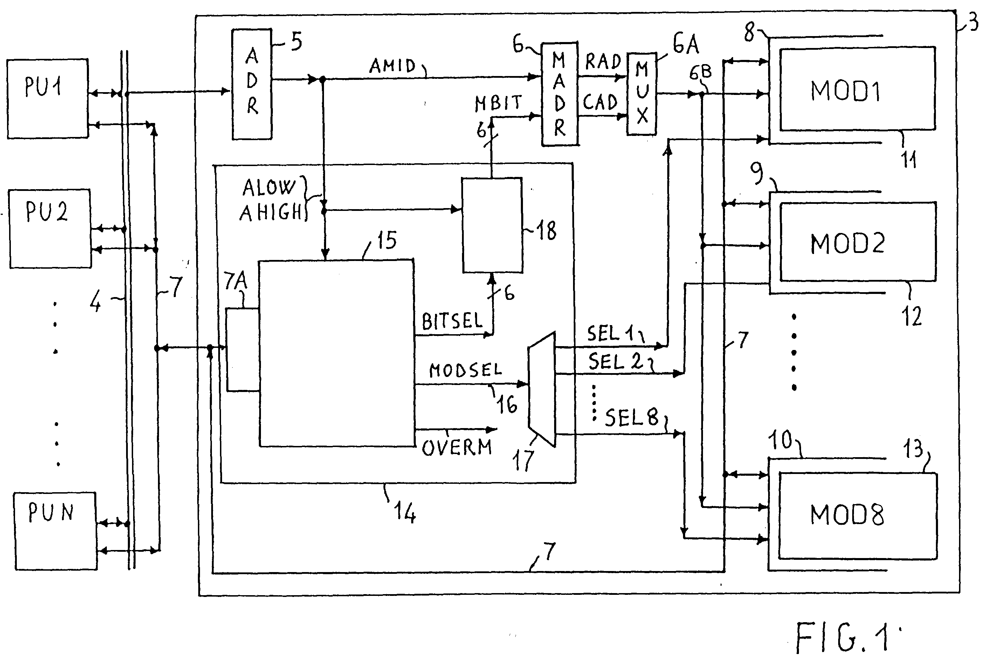

With reference to Figure 1, a data processing system, specifically a multiprocessor system, comprises a plurality of processing units PU1, PU2, PUN connected to a working memory 3 by a system bus 4 wherethrough the various processors send addresses, data, and commands to a memory, and receive information read from said memory.

The memory 3 comprises an input address latching register 5 (ADR), a module address latching register 6 (MADR), and a plurality of housings 8, 9, 10 for a corresponding plurality 11, 12, 13 of memory cards or modules which, in the example of Figure 1, are 8 in number and designated MOD1, MOD2,...MOD8, respectively.

The number of the modules actually installed in the corresponding housings depends on the user's demands.

For instance, a user may only require initially one memory module, and later the installation of one or more additional memory modules, each possibly with a higher capacity than that of the module installed at first.

The working memory comprises a memory configuration unit 14 (hereinafter, the configurator) which selects and activates one of the various modules installed according to the address received and latched into the register 5 (ADR).

The problem of identifying the installed modules and their capacities has been solved by such prior art as European Patents EP-A-0080626 and EP-A-0108346, for example.

Alternatively, and as shown in the figure, the various modules are connected together and to the processors by a two-wire configuring, monitoring channel of the I²CBUS type, which enables one of the processors to interrogate the various modules to check their presence and capacity and accordingly set the configurator 14, also connected to the channel 7, through the interface circuits 7A.

The I²CBUS (Inter-Integrated Circuit Bus) has been specifically defined for this kind of control function and is fully described, together with a plurality of interface and control components using this bus, in "Data Handbook 8051-based 8-bit Microcontroller", published by Philips in 1991.

The configurator 14 of this invention comprises essentially a first circuit means 15 which is input a first field of least significant address bits AMID of orderly increasing weight and a second field of most significant bits AHIGH of orderly decreasing weight, and which output, according to the bits received, a module selection code MODSEL and an address bit selection code BITSEL.

The code MODSEL is sent to a decoder 17 over a channel 16.

The decoder 17 outputs one of a plurality of selection signals SEL1, SEL2, SEL8 for selecting the various modules.

The code BITSEL can be applied directly to the input of the register 6 as a replacement address field for the fields ALOW and AHIGH received by the circuit means 15, or alternatively, as a preferable solution for reasons to be explained, applied to the input of a selection logic 18 comprising essentially a decoder and multiplexers.

The selection logic 18 is input the bit field ALOW and bit field AHIGH, and according to the code BITSEL, selects suitable address input bits and inputs them to the register 6 as module address bits (MBIT).

The register 6 receives, directly from the register 5, a bit field AMID comprising the address bits not included with the other two fields.

Thus, the register 6 is loaded a module address MADR which selects a module location.

The module address in the register MADR can be split conventionally into a line address RAD and a column address CAD, applied to the various modules 11, 12, 13 at successive times through a multiplexer 6A using a distribution channel 6B.

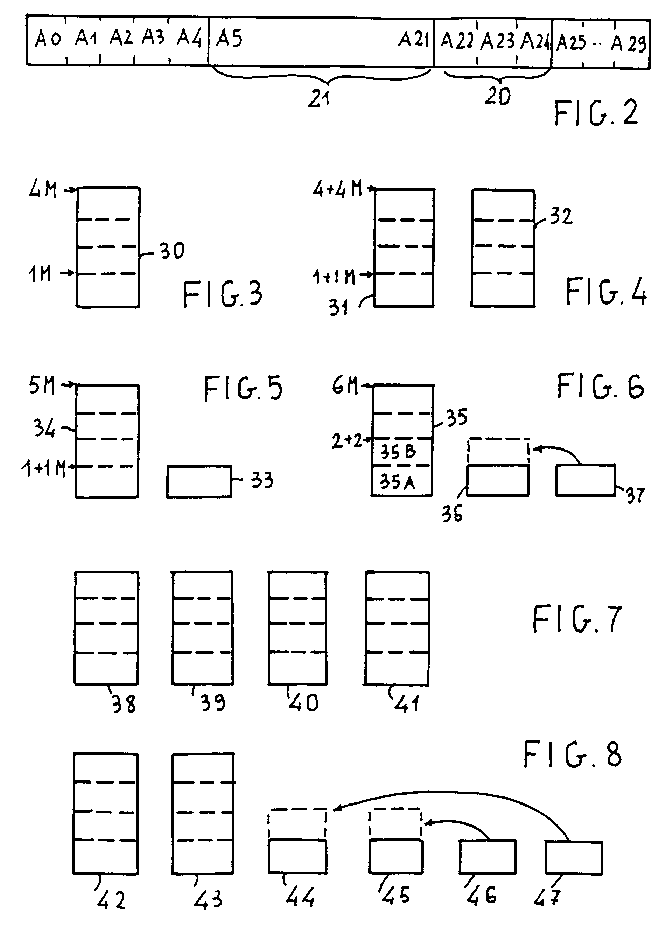

Figure 2 shows the structure or format of a storage address used in the system of Figure 1, wherein the storage modules, varying in number between 1 and 8, are assumed to have each a capacity of either 32 Mbyte or 128 Mbyte, respectively.

Further, the memory parallelism is assumed to be of 32 bytes.

The maximum storage capacity that can be installed is, therefore, 1 Gbyte, and an address formed of 30 bits A00...A29 is required to individually address each byte.

The five bits of least weight A25:A29 identify the byte addressed within the entry or addressable memory location; they do not partecipate, therefore, in the memory addressing process which is carried out using just the bits A0...A24.

These allow 32 Mentry to be identified which need not be all present.

A module with a capacity of 32 Mbyte, that is 1 Mentry, requires 20 bits to select one entry.

A module with a capacity of 128 Mbyte, that is 4 Mentry, requires 22 bits for selecting one entry.

Hereinafter, the capacity of the memory and the modules will be expressed as the number of addressable entries, with the word "entry" dropped.

The bits A00...A24 should be variously used according to the number of the modules installed and their capacities, to provide the highest possible degree of interleaving.

Thus, the 3-bit field 20 A22 to A24 is used fully or in part, according to the number of the modules installed, to select one of the modules and provide an interleaving based on the least significant bits.

However, when the bits A22 to A24 partecipate only in part (or not at all) in the module selection, the remaining portion of the field (or the whole field) must be used for addressing within the module and assisting in the formation of the module address.

The module address is assisted by the intermediate field 21 comprising the 17 address bits A (05:21) as an invariant component.

The bits A02, A03, A04 replace the bits A22, A23, A24, respectively, as module address bits when the bits A22, A23, A24 partecipate in the module selection to define a 2-, 4-, 8-way low interleaving condition.

In this way, a 20-bit address can be readily formed which allows a module to be addressed if the latter has a capacity of 1 M.

However, it should be held in mind that the modules may have a capacity of 4 M. In this case, for addressing the module, two additional bits should be used which, in a memory configured with no (low) interleaving, are the bits A03, A04 output from the register 5.

With a (low) interleaving memory, these two bits cannot be used without modifications for the following reasons:
1) If the memory block identified by the bits A00, A04 is interleaved, the bits A03, A04 have already been used as substitutes for the bits A23, A24, and must be substituted, in turn, with more significant bits.
2) Even if the memory block identified by the bits A00, A04 is not interleaved, it can identify within a module a portion or block used to provide a low interleaving level, and the bits A03, A04 should be modified to take this into account.

Thus, it is usually necessary to modify the bits A03, A04 by replacing them with bits A3M, A4M selected according to the memory configuration and the interleaving levels adopted for the orderly preceding storage spaces with respect to those identified by the bits A00-A04.

This selection and modification is carried out by the circuit means 15 which, in the simplest of embodiments, comprises a read/write memory with associative table functions which associates, with every possible input address code consisting of the 8 bits A(0:4) and A(22:24), a module selection code (MODSEL), obviously a 3-bit one, and a code representing module address bits BITSEL to be loaded into the register 6.

When the presentation of these bits is directed to outgo from the means 15, the code BITSEL must, of course, comprise 6 bits (A24A, A23M, A22M, A4M, A3M).

The correlation between addresses being applied to the memory 15 and outgoing codes is set by writing such memory codes 15 through the interface circuits 7A on the basis of the number of modules actually installed, their capacities, and the interleaving levels that can be obtained as a result.

Apparently with this approach, the memory 15 is to have a relatively large capacity and a high parallelism.

In the example, the memory 15 should have a capacity of 2⁸ = 256 entries and a parallelism of at least 9 bits.

The parallelism of the memory 15 further increases when the memory 15 is required to supply more indications, such as a signal OVERM indicating recognition of a memory address in excess of the installed capacity.

Thus, the module addresses are best formed, rather than in a direct manner, through a selection logic (18 in Figure 1) which will load the appropriate bits into the register 6 according to the BITSEL code 19.

Since there are four possible interleaving situations in the example of Figure 8 and two bits A03, A04 requiring modification, a 4-bit code will be enough to control the logic 18 which may comprise a decoder for generating (according to the input bits) the two modified bits A3M, A4M, and the control signals of a triplet of multiplexers for selective transfer of the bits A24, A04, A23, A03, A22, A02.

In this way, the memory parallelism can be reduced.

The memory 15 is written with appropriate information, as suitably processed by one of the processors, through the channel I²CBUS and the interface circuits 7A which conventionally supply the memory 15 with a write address, a write command, and the information to be written, all as conventionally timed by the timing signal.

Before discussing in detail a preferred embodiment of the configurator 14 and variations thereof, Figures 3 to 9 should be considered which depict some of the memory situations that can be obtained and their corresponding interleaving levels.

The physical storage space may be viewed as a stack of orderly stacked addressable locations, divided into blocks and split between modules.

The addresses required to identify a location vary between 1 and no more than 32 M, according to the number of the modules installed and their capacities.

Figure 3 shows the physical and storage space available where a single module 30 is installed.

Obviously, in this case, no interleaving would be allowed, and the bits A22...A24 would only contribute to the module address formation.

If the module capacity is 1 M, then the bits A00...A04 must be at a logic 0 level.

Otherwise, they would point to a storage entry which is not physically available.

The configurator 14 may be conventionally set, in this case, to provide an "overmemory" indication.

The function of the configurator 14 is basically one of associating all the partial addresses received, irrespective of the logic level of the bits A22...A24, with the particular housing 8, 9...10 (Figure 1) which has the module 30 therein, and of controlling the logic 18 to transfer the bits A22...A24 through the latter and load them into the MADR register 6.

Quite similar is the case of a single module with a capacity of 4 M being installed, the single difference consisting of that the bits A03 and A04 may have a logic level of 1 and are used to form the module address.

It can be observed right now that to permit the modules to be installed in random order in the various viable housings (this involves the need for the unit 14 to generate a housing selection code according to the housing where the module is installed), the logic 18 control must be disjoined from the selection of the housing/module.

It is necessary, therefore, for the unit 15 to generate two discrete codes, one for controlling the logic 18 and another for selecting the housing and associated module.

Later in this description, an embodiment will be discussed which can overcome this limitation.

Figure 4 shows the physical storage space which would be available in the instance of two memory modules 31, 32 being installed which have the same capacity of 1 M or 4 M.

In this case, the installed capacity would either be 1+1=2M or 4+4=8M, and a two-way interleaved-type memory can be provided using the bit A24 of least weight to select either of the two modules.

According to the level of the input bit A24, the unit 15 will generate a selection code to select either of the modules and a control code to the logic 18, which will transfer the bits A22, A23 into the register 6, but not the address bit A24.

The bit A04 is transferred instead into the register 6.

Figure 5 illustrates the instance of a pair of modules, one 33 with capacity 1 M and another 34 with capacity 4 M, which may be regarded as formed of four blocks each with a capacity of 1 M, being installed.

The installed capacity is, therefore, of 5 M.

Here too a two-way interleaved memory can be implemented by coupling a block from module 34 to the module 33.

However, such interleaving can only be implemented for a capacity of 1+1M, namely for a set of addresses which are, preferably but not necessarily, within the 0 to 2 M range.

The addresses within the 2 M to 5 M range correspond to a storage space which is accessible without interleaving.

The separation between the two spaces is defined by the bits A02, A03 of greatest weight which, when at level 1, identify an address higher than 2 M and 4 M, respectively.

Accordingly, the unit 15 will output, in response to the input bits A02, A03, a selection code which selects either of the two modules 33, 34 according to the logic level of the bit A24, if A2,A3=0.

Otherwise, (A2=1 or A3=1) it selects the module 34.

In the former case, the bits A22...A23, but not A24, would be loaded into the register 6 by the logic 18 substituting the bit A04 for the bit A24.

In the latter case, the bits A22...A24 would all be loaded into the register 6.

Figure 6 illustrates the instance of a module triplet 35, 36, 37 being installed, of which one (35) has a capacity of 4 M and the other two a capacity of 1 M.

In this case a two-way interleaved memory can be implemented by coupling a first block 35A from module 35 to the module 36, and a second block 35B from module 35 to the module 37.

Thus, a two-way interleaving is provided to an overall capacity of 4 M, with 2 M of storage, corresponding to the addresses of 4 to 6 M, being accessible without interleaving.

It can be seen that in this case the modules 35 and 36 should be associated with addresses in the 0 to 2 M range, and the modules 35 and 37 with addresses in the 2 to 4 M range.

Here again, the unit 15 will output, in response to the bits A02, A03 and A24, the selection signal for the appropriate module, it selecting in all events (independently of A24) the module 35 when A02=1. Again, if A02=0, the bit A04 is loaded into the register 6 to substitute for the bit A24.

Figure 7 illustrates the instance of four modules 38, 39, 40, 41 with the same capacity of 1 M or 4 M, or different capacities, being installed. Apparently in this case, with modules of similar capacity, a four-way or level interleaving can be implemented using the bits A23, A24 to effect the selection of the various modules through the unit 15.

The bits A3, A4 are loaded into the register 6 instead of the bits A23, A24.

When the modules have different capacities, e.g. two modules 38, 39 have a capacity of 4 M and two modules 40 and 41 have a capacity of 1 M, a four-way interleaving can be provided for the storage space in the 0 to 4 M range and a two-way interleaving for the storage space in the 4 M to 10 M range.

Like considerations apply to the instance of three modules having a capacity of 4 M, when two blocks for 2 M from one of the modules would bring about no interleaving, and to the instance of one only of the modules having a capacity of 4 M, when a four-way interleaving can be implemented for the storage space in the 0 to 4 M range.

Figure 8 illustrates the instance of a 6-module installation, of which two modules 42, 43 have a capacity of 4 M, and the remaining 44, 45, 46, 47 a capacity of 1 M.

Apparently in this case, the modules 42, 43, 44, 45 allow a four-way interleaving to be provided for the storage space in the 0 to 4 M range, the modules 42, 43 and 46, 47 allow a further four-way interleaving to be provided for a further storage space in the 4 to 8 M range, and the remaining modules 42, 43 allow a two-way interleaving to be provided for the remaining storage space in the 8 to 12 M range.

In the light of these considerations, an examination of the other possible configurations with 5, 7, 8 modules installed which have the same or different capacities becomes a simple matter.

In general, with the different possible configurations of the memory installed, there may be associated a number of modules (or fraction thereof in the instance of modules with a capacity of 4 M) such that the highest possible level of interleaving can be attained in the configuration, and the remaining modules (or fractions) may be used to attain an interleaving level with a lower number of ways, optionally leaving a single module or fraction as a remainder to be selected as non-interleaved.

It is apparent that where circumstances make it advisable, the interleaving memory setup may be replaced, wholly or in part, owing to a preset of the unit 15, by a storage structure with interleaving of the high type.

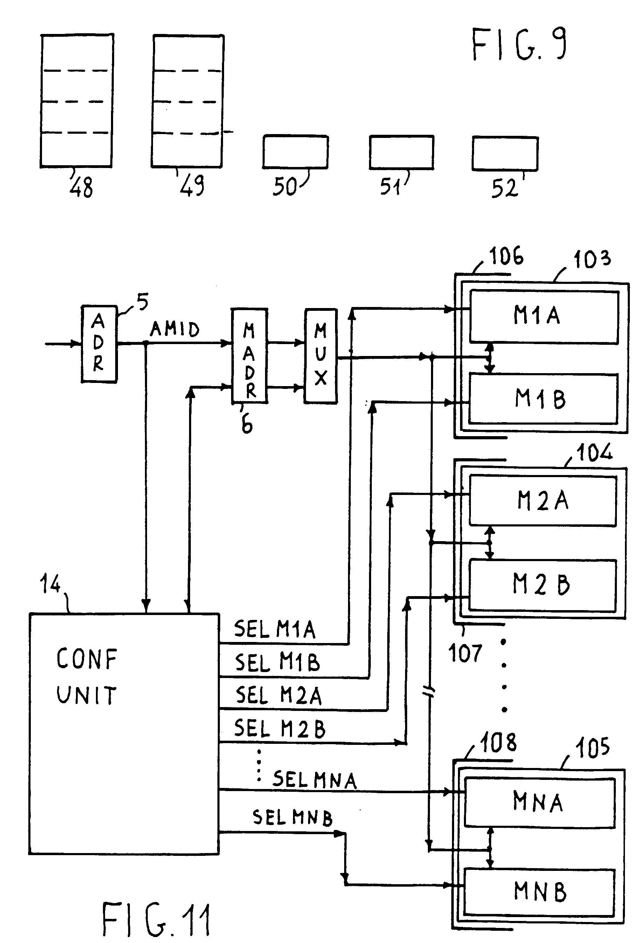

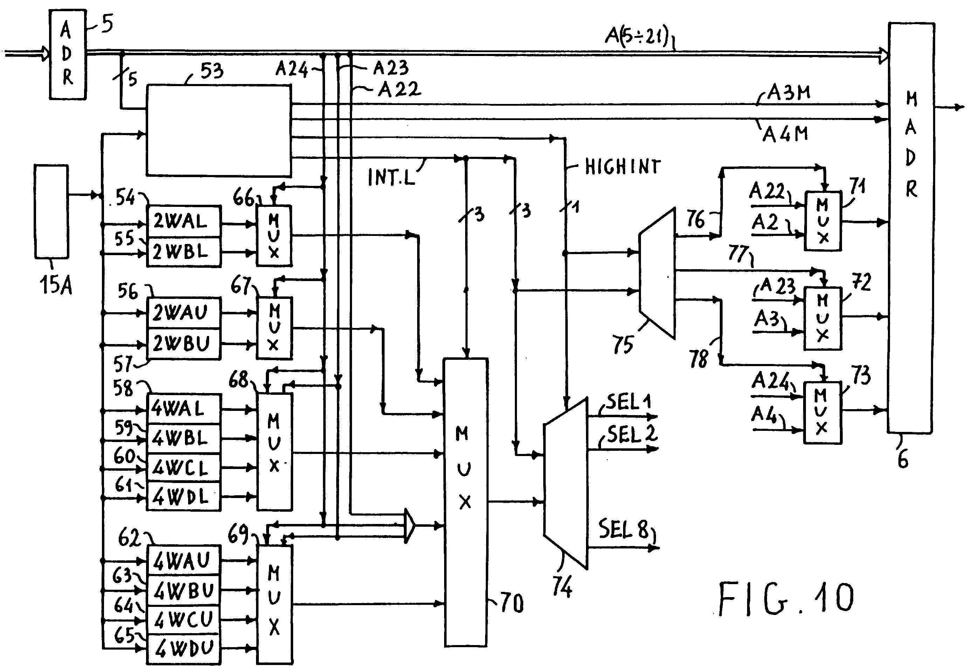

For example, Figure 9 illustrates the instance of a memory with five modules 48, 49, 50, 51, 52 installed, of which the first two have a capacity of 4 M and the rest a capacity of 1 M. The first two modules may be associated to provide a two-way (low) interleaving for a storage space in the 0 to 8 M range, whereas the other three modules may form a storage space in the 8 to 11 M range with interleaving of the high type.

These three modules only require for their selection that the most significant address bits be used.

In the example of Figure 1, all these associations of storage spaces and addressed modules can be readily implemented by a unit 15 comprising a RAM store which is input the bits A00...A04 and the bits A22...A24, i.e. has a capacity of 2⁵⁺³=256 entries.

The memory parallelism is to allow the storing of a 3-bit code for selecting one of the 8 modules and of at least one 4-bit code for controlling the selection logic 18.

According to a further aspect of this invention, the required storage capacity by the circuit means 15 and for converting the address bits into a module selection code and a module address bit selection code is reduced introducing no restrictions to the freedom of choice among possible interleaving levels and types adopted, using a structure such as that shown in Figure 10, where the functional criterion consists of selecting the memory modules with an indirectness which defines the interleaving type and level which have been associated with each address by means of a first code.

This code is used, along with the address bit of least significant weight A22...A24 to select, by a multiplexer network, one of various housing/module selection codes stored in a plurality of registers, each dedicated for a particular type and level of interleaving.

In this way, the circuit means 15 can be implemented as a plurality of registers and multiplexers associated with a configuration memory which is only input the most significant bits A0...A04, and therefore has a greatly reduced capacity. Minimizing the storage capacity is advantageous from various aspects: the configurator is more readily integratable to other circuits in order to form, for example, a memory control unit provided on a single integrated device (chip) and the time is minimized for its writing and setting.

In Figure 10, the formatting unit consists of a formatting memory 53, a plurality of registers 54 to 65, a plurality of multiplexers 66 to 73, and a pair of decoders 74, 75.

The memory 53 and the registers 54 to 65 are loaded with appropriate codes by means of the interface circuits 15A with the bus i²CBUS, taking into account the number of the memory modules installed, their capacity, possible interleaving levels, and choices made by a supervisor program or an operator for adopting one or another type of interleaving of all the possible ones.

It is an easy matter to verify that in relation to the possible presence of any number of installed modules between 1 and 8 with a capacity of either 1 M or 4 M under any conditions, when the highest possible level of interleaving is selected, the memory configuration can be described by codes contained in the registers 54 to 65, each of which is assigned the task of storing a module selection code characterized by a predetermined level of interleaving.

For any configuration of the memory installed, the largest number of modules present and associated to provide a two-way interleaving is 4, associated in sets of two.

Thus, the registers 54, 55 and 56, 57 are intended for storing a selection code to select one of these modules.

This 3-bit code, as respectively indicated at 2WAL, 2WBL, 2WAU, 2WBU, defines the housing which contains the identified module, which may then be located in any of the housings.

Likewise, for any configuration of the memory installed, the maximum number of modules present, associated to provide a 4-way interleaving is 8 associated in sets of 4.

Thus, the registers 58 to 61 and 62 to 65 are respectively intended for storing a selection code for selecting one of these modules.

Here too the 3-bit codes define the housing which contains the identified module.

Finally, an 8-way interleaving can only be implemented with all of the 8 modules installed.

In this case, the module selection can be obtained by using the address bits of least weight A22, A23, A24 directly.

The outputs of the registers 54, 55 and 56, 57 are connected to the inputs of the multiplexers 66 and 67, respectively.

The outputs of the registers 58...61 and 62...65 are connected to the inputs of the multiplexers 68 and 69, respectively.

The multiplexers 66, 67 are controlled by the bit of least weight A24 and the multiplexers 68, 69 by the bit pair of least weight A23, A24.

The outputs of the multiplexers 66, 67, 68, 69 are connected to the inputs of the multiplexer 70, which also receives, on a fifth set of inputs, the bit triplet A22, A23, A24.

The multiplexer is controlled by a 3-bit code INT.L output from the memory 53. The memory 53, being only addressed by the 5 most significant bits A (00:04) output from the register 5, and therefore with a capacity of just 32 entries, outputs in addition to the code INT.L a 1-bit signal HIGHINT which defines the storage space identified by the bits A (00:04) as characterized by high or low interleaving, and a pair of bits A3M, A4M loaded directly into the register 6 (MADR).

According to the logic level of the signal HIGHINT, the code INT.L has two meanings: for low interleaving, it defines the interleaving level (2, 4 or 8) and which of the two sets of registers is to be selected.

For high interleaving, it defines directly which module, or more precisely which housing, is to be selected.

The outputs of the multiplexer 70 are connected to the inputs of the decoder 74, which is also input the code INT.L and signal HIGHINT.

According to the level of HIGHINT the decoder 74 decodes the code received by the multiplexer 70, or alternatively, the code INT.L into one of eight module selection signals SEL1...SEL8.

The signal HIGHINT and code INT.L are also input to the decoder 75, whose outputs 76, 77, 78 control the two-way multiplexers 71, 72, 73, respectively.

The multiplexer 71 is input the address bits A22 and A02.

The multiplexer 72 is input the address bits A23 and A03.

The multiplexer 73 is input the address bits A24 and A04.

When the signal HIGHINT indicates that the interleaving being used is the high one, the multiplexers 71, 72, 73 transfer the bits A22, A23, A24 to the output and load them into the register 6.

When HIGHINT indicates that the interleaving in use is the low one (at a level defined by the code INT.L), the bits A24, A23, A22 are wholly or in part replaced with the bits A04, A03, A02 output from the multiplexers 71, 72, 73.

The register 6 also receives the bits A(05:21) from the register 5, to complete the module addressing code.

The number of the registers increases with that of the modules that can be installed in the memory, and hence with the number of the possible levels of interleaving. For example, the embodiment previously described as applied to a memory which may comprise 16 modules, with a capacity of 1 M or 4 M, would require a configuration storage capacity of 64 entries, and 28 registers, with attendant increased complexity of the multiplexing circuitry.

The register capacity should also be increased from 3 to 4 bits for identifying one of 16 possible modules.

According to a further aspect of this invention, the number of the registers required is limited by the adoption of some restrictions to the freedom of choice of the number of modules that can be installed and their association into interleaved structures.

The restrictions consist essentially of providing, as shown in Figure 11, a memory structure based on boards 103, 104, 105, each contained in a housing 106, 107, 108 and comprising a pair of modules M1A, M1B, M2A, M2B...MNA, MNB of equal capacity and associable together into an interleaved pair.

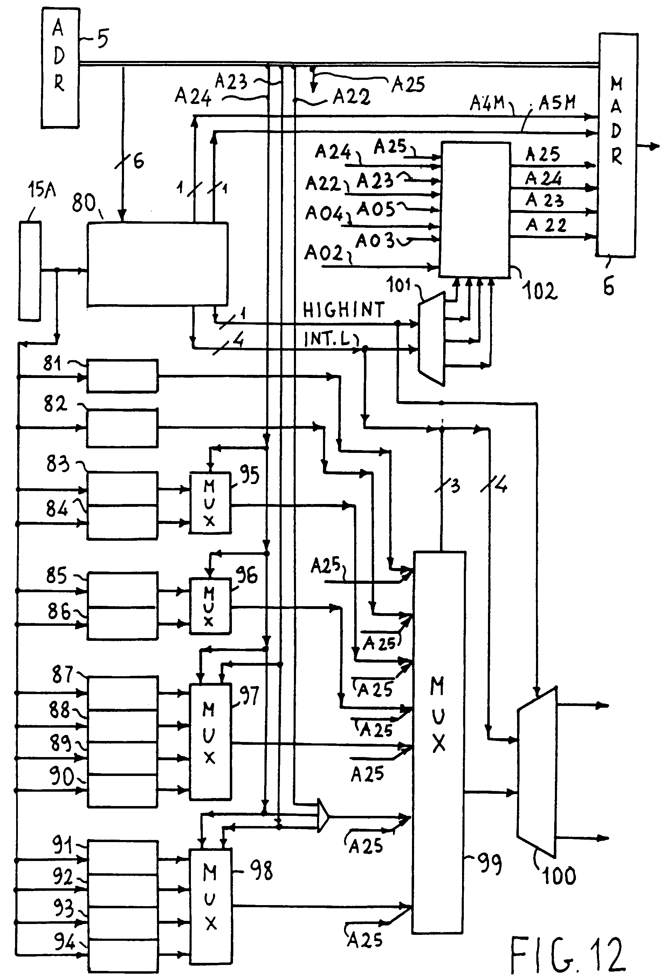

By this limitation, the number of the registers required can be halved, as can the complexity of the multiplexing circuitry as shown in Figure 12, which depicts a formatting unit for a memory comprising up to 16 modules with a capacity of either 1 M or 4 M.

Apparently in this case, the storage address would comprise 26 bits, and the highest possible level of interleaving would be 16.

The bits A0 to A5 identify a storage block of 1 M within a space of 64 M contained in one of the various modules, and the bits A25 to A22 allow one of the various modules to be selected in the instance of low interleaving.

In Figure 12, the configuration unit comprises a memory 80, 14 registers 81, 82...94, a plurality of multiplexers 95 to 99, two decoders 100, 101, and selection circuits (basically a set of multiplexers) 102.

The memory 80 is addressed by the bit A00...A05 and outputs the bits A4M, A5M, signal HIGHINT and a 4-bit code INT.L with a similar function to that of the homonymic signals in Figure 10.

The registers 81, 82 identify with 3 bits each a pair of modules belonging to the same board and being associated in 2-way interleaving.

The two pairs of registers 83, 84 and 85, 86 identify each with 3 bits two pairs of modules belonging to two boards associated in four-way interleaving.

The set of four registers 87...90 and 91...94 identify four pair each of registers associated in 8-way interleaving.

The outputs of the registers 83, 84 and 85, 86 are respectively connected to the inputs of the multiplexers 95, 96 controlled by the address bit A24.

The outputs of the registers 87...90 and 91...94, respectively, are respectively connected to the inputs of the multiplexers 97, 98 controlled by the address bits A23, A24.

The outputs of the registers 81, 82 and that of the multiplexers 95, 96, 97, 98 are connected to the inputs of the multiplexer 99 which also receives, on a set of inputs, the 4 address bits A25, A24, A23, A22 for selecting a module in the instance of 16-way interleaving.

With the 3-bit code received on the other inputs of the multiplexer, there is associated a fourth bit, consisting of bit A25, for selecting the module to be selected from the module pair identified by the 3-bit codes.

The remaining parts of the unit are identical with those considered in connection with Figure 10.

According to the logic level of the signal HIGHINT, 3 bits of the code INT.L are used as a control code for the multiplexer 99, or all four bits of the code INT.L are used for the module selection code.

In addition, the signal HIGHINT and code INT.L, as input to the decoder 101, allow the selection circuits 102 to be controlled to load the appropriate bits into the register 6 according to the type of interleaving and its level.

The bits A4M and A5M are supplied directly from the memory 80.

The embodiment of Figure 12 does not rule out the possibility that some boards (even more than one) may contain a single memory module.

This embodiment may occur, for instance, as a result of the initial installation of one or more boards with minimal capacity, consisting of a single module, or as a result of a failure damaging one module in a pair, which module must be excluded from the memory configuration.

In this case, the individual modules or the survivor module may all the same be addressed as non-interleaved modules, viewed as high-interleaved and selected as the signal HIGHINT is asserted.

Clearly the foregoing description relates to a preferred embodiment and variations thereof, and many other variations may be introduced.

As an example, the bit A25 input to the multiplexer 99 of Figure 11 may be input to the decoder 100.

Further, and again with reference to Figure 11, if the added restriction is admitted that all the modules installed except one are associated in pairs carried on the same board, the same concept of choosing between two paired modules according to the bit A25 may also be applied to HIGH interleaved modules effecting the selection by means of the address bit A05 input to the decoder 101.

By this expedient, the memory 80 can be addressed by just the 5 most significant bits A0...A04, and its capacity can be halved.

In this case, the code INT.L can be reduced to 3 bits to also accomplish a reduction in the memory parallelism.

To make the co-existence possibile, in a modular memory of this type, of a board wherein one module only is active (as may occur in consequence of a failure in either of the board modules and its exclusion), the survivor active module may be identified by the memory 80 through the code INT.L that characterizes it as non-interleaved by selecting a register, similar to the registers 81...94, which contains a module selection code.

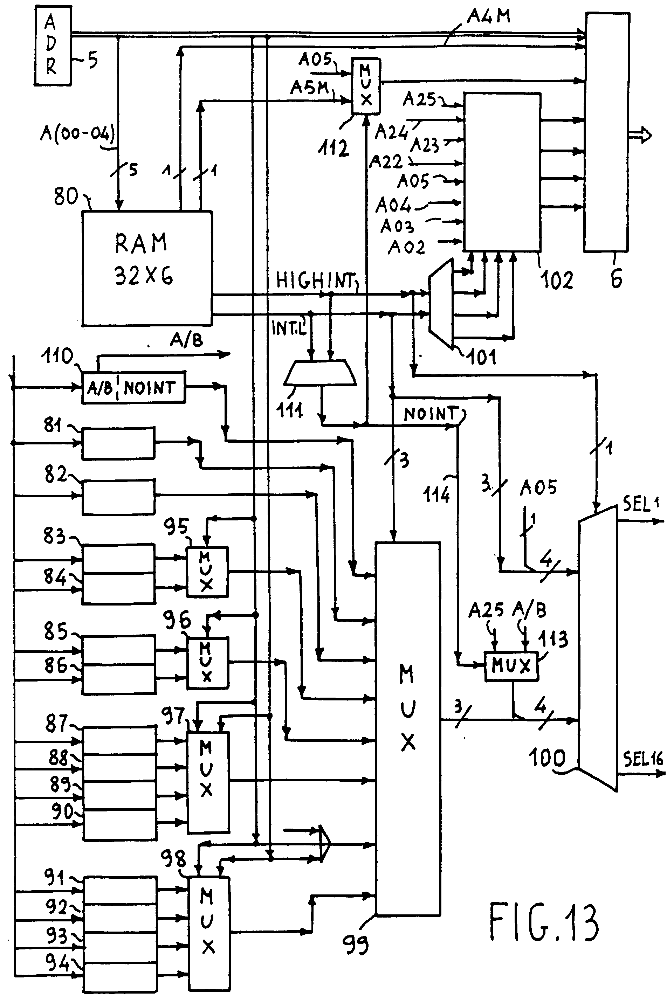

Figure 13 shows this further version and only differs from the solution of Figure 12 in point of detail.

Thus, the corresponding circuit elements in the two embodiments which perform the same function are denoted by the same reference numerals.

In Figure 13, the formatting unit includes as added elements a four-cell register 110, a decoder 111, and two multiplexers 112, 113.

The register 110 is loaded with a three-bit code which identifies a board housing where a single module is active, whilst the fourth bit A/B identifies the active one of the two board modules.

The memory 80 with a capacity of 32 entries is only addressed by the most significant address bits A(00:04) and outputs the signal HIGHINT and code INT.L which would comprise but 3 bits in this case.

The code INT.L controls the multiplexer 99 which, in this case, would comprise eight sets of inputs for transferring to the output the module pair code associated with the particular level of interleaving defined by the code INT.L.

In this case, the code INT.L would also define a non-interleaved condition, exclusive for the board on which just one module is active and allow the code loaded into the register 110 to be selected and transferred.

The decoder 111, which is input the code INT.L and signal HIGHINT, recognizes the non-interleaving code and asserts a signal NOINT on a wire 114 to control the multiplexer 113.

The multiplexer 113 adds, to the code being output from the multiplexer 113, a fourth bit comprising the bit A25 in the interleaving case, and the bit A/B loaded into the register 110, in the non-interleaving case.

The four-bit code thus formed is input to the decoder 100, as controlled by the signal HIGHINT.

The decoder 100 is also input the code INT.L associated with the bit A05 from the address channel.

Once the signal HIGHINT is asserted, this four-bit code is decoded into a module selection signal.

The memory 80 also outputs two signals A4M and A5M representing the modified bits to be applied to the register MADR6.

Alternatively, the signal A5M is applied to the bit A05 being output from the register 5 through the multiplexer 112, controlled by the signal NOINT.

In fact, when the address recognized by the memory 80 identifies the non-interleaved module, the bit A05 should be used directly to form the module address.

## Claims

1. A variable interleaving level memory (3) comprising independently addressable storage modules (11-13) provided in a number between 1 and a maximum, with each module (11-13) having a variable capacity multiple of a basic capacity of one memory block,
means (5) for storing an address (ADR) for identifying an entry of the memory (3), the address (ADR) including a first field (ALOW) of least significant memory address bits with orderly increasing weight, a second field (AHIGH) of most significant memory address bits with orderly decreasing weight, and a third field (AMID) of intermediate memory address bits,
a first circuit means (14) preset with information correlated to the number of the modules (11-13), the capacity of each module (11-13) and a desired interleaving level, the first circuit means (14) having inputs for receiving the first field (ALOW) and the second field (AHIGH), and having outputs for providing, according to the preset information, the received first field (ALOW) and the received second field (AHIGH), a module selection signal from a plurality of module selection signals (SEL1-SEL8) and a module address field (MBIT), none of the bits of the first field (ALOW), if no interleaving is desired, or at least one of the bits of the first field (ALOW), according to the desired interleaving level, contributing to defining the module selection signal, the at least one bit of the first field (ALOW) being replaced by corresponding bits of the second field (AHIGH) for contributing to defining the module address field (MBIT), and
a second circuit means (6) receiving the third field (AMID) and the module address field (MBIT) for addressing the entry in a module (11-13) selected by said module selection signal (SEL1-SEL8).

2. A memory as in Claim 1, wherein said modules (11-13) have different capacities, at least one of said modules having a capacity equal to a minimum, another of said modules having a multiple capacity of said minimum.

3. A memory as in either Claim 1 or 2, wherein said first circuit means (14) comprises:
a read/write memory (15) addressed by said first (ALOW) and second (AHIGH) fields to output a first module selection code (MODSEL) and a second module address bit selection code (BITSEL);
a decoder (17) connected to said memory (15) to receive said first selection code (MODSEL) and decode said first code (MODSEL) in one of said plurality of module selection signals (SEL1-SEL8); and
a third circuit means (18) controlled by said second code (BITSEL) and being input said first field (ALOW) and at least one portion of said second field (AHIGH) to generate said module address field (MBIT).

4. A memory as in either Claim 1 or 2, wherein said first circuit means (14) comprises:
a further read/write memory (53) addressed by said second field (AHIGH) to output a first signal (HIGHINT), a third code (INT.L) representing an interleaving level associated with said second field (AHIGH) for a first level of said first signal (HIGHINT) and representing a module selection code for a second level of said first signal (HIGHINT);
a plurality of registers (54-65), each associated with a predetermined interleaving level to store a module selection code associated with said predetermined level;
a first selection means (66-69) controlled by at least one portion of said first field (ALOW, A23, A24) to select one of said registers (54-65), from a plurality of registers associated with the same predetermined level of interleaving;
a second selection means (70) controlled by said third code (INT.L) to select one from the registers (54-65) selected by said first selection means (66-69);
a decoder (74, 100) connected to said second selection means (70) and to said further read/write memory (53) to receive a selection code stored into one of said registers (54-65), said third code (INT.L) and said first signal (HIGHINT), and to decode said received codes into one of said plurality of module selection signals (SEL1-SEL8); and
a third circuit means (75, 71, 72, 73) controlled by said third code (INT.L) and said first signal (HIGHINT) and being input said first field (A22, A23, A24) and at least one portion of said second field (A04, A03, A02) to generate a first portion of said module address field (MBIT).

5. A memory as in Claim 4, wherein said further read/write memory (53) generates a second portion (A3M,A4M) of said module address field (MBIT).

6. A memory as in Claim 4, wherein said plurality of modules (103-105) are set up as pairs of associated modules (M1A,M1B-MNA,MNB) and said plurality of registers (81, 94) stores an associated module pair selection code, said memory including a means (99, 100) of forming a module selection code by associating the bit of least weight in said first field (ALOW) with said pair selection codes.

7. A memory as in Claim 6, wherein said third code (INT.L) for said second level of said first signal (HIGHINT) represents an associated module pair selection code, including a means (100) of forming the module selection code by associating the bit of least weight (A05) in said second field (AHIGH) input to said first circuit means (14) with said third code, said further read/write memory (80) being addressed by the bits of said second field (AHIGH) to the exclusion of said bit of least weight (A05).

8. A memory as in Claim 7, comprising a register (110) for storing a selection code (NOINT), selecting a module not associated in pairs, and a means (99, 113) for inputting said selection code (NOINT) selecting a module not associated in pairs to said decoder (100; and
a means (112) for selectively inputting said second circuit means (6) with one bit (A5M) of said module address field generated by said read/write memory or said bit of least weight (A05) of said second field (AHIGH).

## Patentansprüche

1. Ein Speicher (3) mit einem variablen Verschachtelungspegel, mit folgenden Merkmalen:
unabhängig adressierbaren Speichermodulen (11 - 13), die in einer Anzahl zwischen Eins und einem Maximum vorgesehen sind, wobei jedes Modul (11 - 13) eine variable Kapazität, die ein mehrfaches einer Basiskapazität von einem Speicherblock ist, aufweist,
einer Einrichtung (5) zum Speichern einer Adresse (ADR) zum Identifizieren eines Eintrags des Speichers (3), wobei die Adresse (ADR) ein erstes Feld (ALOW) von niederstwertigen Speicheradreßbits mit der Reihe nach zunehmender Wertigkeit, ein zweites Feld (AHIGH) von höchstwertigen Speicheradreßbits mit der Reihe nach abnehmender Wertigkeit und ein drittes Feld (AMID) von Zwischenspeicheradreßbits aufweist,
einer ersten Schaltungseinrichtung (14), die mit Informationen voreingestellt ist, die mit der Anzahl der Module (11 - 13), der Kapazität jedes Moduls (11 - 13) und einem gewünschten Verschachtelungspegel korreliert sind, wobei die erste Schaltungseinrichtung (14) Eingänge aufweist, um das erste Feld (ALOW) und das zweite Feld (AHIGH) zu empfangen, und Ausgänge aufweist, um entsprechend den voreingestellten Informationen, dem empfangenen ersten Feld (ALOW) und dem empfangenden zweiten Feld (AHIGH) aus einer Mehrzahl von Modulauswahlsignalen (SEL1 - SEL8) ein Modulauswahlsignal und ein Moduladreßfeld (MBIT) zu liefern, wobei keines der Bits des ersten Felds (ALOW), wenn keine Verschachtelung erwünscht ist, oder zumindest eines der Bits des ersten Felds (ALOW) entsprechend dem gewünschten Verschachtelungspegel beiträgt, um das Modulauswahlsignal zu definieren, wobei das zumindest eine Bit des ersten Felds (ALOW) durch entsprechende Bits des zweiten Felds (AHIGH) ersetzt wird, um zum Definieren des Moduladreßfelds (MBIT) beizutragen, und
einer zweiten Schaltungseinrichtung (6), die das dritte Feld (AMID) und das Moduladreßfeld (MBIT) empfängt, um den Eintrag in einem Modul (11 - 13), der durch das Modulauswahlsignal (SEL1 - SEL8) ausgewählt wird, zu adressieren.

2. Ein Speicher nach Anspruch 1, bei dem die Module (11 - 13) unterschiedliche Kapazitäten aufweisen, wobei zumindest eines der Module eine Kapazität aufweist, die gleich einem Minimum ist, während ein weiteres der Module eine Kapazität aufweist, die ein Mehrfaches des Minimums ist.

3. Ein Speicher nach Anspruch 1 oder 2, bei dem die erste Schaltungseinrichtung (14) folgende Merkmale aufweist:
einen Lese/Schreib-Speicher (15), der durch das erste Feld (ALOW) und das zweite Feld (AHIGH) adressiert wird, um einen ersten Modulauswahlcode (MODSEL) und einen zweiten Moduladressbit-Auswahlcode (BITSEL) auszugeben;
einen Decodierer (17), der mit dem Speicher (15) verbunden ist, um den ersten Auswahlcode (MODSEL) zu empfangen und den ersten Code (MODSEL) in eines der Mehrzahl von Modulauswahlsignalen (SEL1 - SEL8) zu decodieren; und
eine dritte Schaltungseinrichtung (18), die durch den zweiten Code (BITSEL) gesteuert wird, in die das erste Feld (ALOW) und zumindest ein Abschnitt des zweiten Felds (AHIGH) eingegeben wird, um das Moduladreßfeld (MBIT) zu erzeugen.

4. Ein Speicher nach Anspruch 1 oder 2, bei dem die erste Schaltungseinrichtung (14) folgende Merkmale aufweist:
einen weiteren Lese/Schreib-Speicher (53), der durch das zweite Feld (AHIGH) adressiert wird, um ein erstes Signal (HIGHINT) und einen dritten Code (INT.L) auszugeben, der für einen ersten Pegel des ersten Signals (HIGHINT) einen Verschachtelungspegel, der dem zweiten Feld (AHIGH) zugeordnet ist, darstellt, und der für einen zweiten Pegel des ersten Signals (HIGHINT) einen Modulauswahlcode darstellt;
eine Mehrzahl von Registern (54 - 65), von denen jedes einem vorbestimmten Verschachtelungspegel zugeordnet ist, um einen Modulauswahlcode, der dem vorbestimmten Pegel zugeordnet ist, zu speichern;
eine erste Auswahleinrichtung (66 - 69), die durch zumindest einen Abschnitt des ersten Felds (ALOW, A23, A24) gesteuert wird, um eines der Register (54 - 65) aus einer Mehrzahl von Registern, die dem gleichen vorbestimmten Verschachtelungspegel zugeordnet sind, auszuwählen;
eine zweite Auswahleinrichtung (70), die durch den dritten Code (INT.L) gesteuert wird, um eines aus den Registern (54 - 65), die durch die erste Auswahleinrichtung (66 - 69) ausgewählt sind, auszuwählen;
einen Decodierer (74, 100), der mit der zweiten Auswahleinrichtung (70) und dem weiteren Lese/Schreib-Speicher (53) verbunden ist, um einen Auswahlcode, der in einem der Register (54 - 65) gespeichert ist, den dritten Code (INT.L) und das erste Signal (HIGHINT) zu empfangen und die empfangenen Codes in eines der Mehrzahl von Modulauswahlsignalen (SEL1 - SEL8) zu decodieren; und
eine dritte Schaltungseinrichtung (75, 71, 72, 73), die durch den dritten Code (INT.L) und das erste Signal (HIGHINT) gesteuert wird, und in die das erste Feld (A22, A23, A24) und zumindest ein Abschnitt des zweiten Felds (A04, A03, A02) eingegeben wird, um einen ersten Abschnitt des Moduladreßfelds (MBIT) zu erzeugen.

5. Ein Speicher nach Anspruch 4, bei dem der weitere Lese/Schreib-Speicher (53) einen zweiten Abschnitt (A3M, A4M) des Moduladreßfelds (MBIT) erzeugt.

6. Ein Speicher nach Anspruch 4, bei dem die Mehrzahl von Modulen (103 - 105) als Paare von zugeordneten Modulen (M1A, M1B - MNA, MNB) eingestellt sind, wobei die Mehrzahl von Registern (81, 94) einen Auswahlcode eines zugeordneten Modulpaars speichert, wobei der Speicher eine Einrichtung (99, 100) zum Bilden eines Modulauswahlcodes durch das Zuordnen des niederstwertigen Bits in dem ersten Feld (ALOW) zu den Paarauswahlcodes aufweist.

7. Ein Speicher nach Anspruch 6, bei dem der dritte Code (INT.L) für den zweiten Pegel des ersten Signals (HIGHINT) einen Auswahlcode eines zugeordneten Modulpaars darstellt, der eine Einrichtung (100) zum Bilden des Modulauswahlcodes durch Zuordnen des niederstwertigen Bits (A05) in dem zweiten Feld (AHIGH), das in die erste Schaltungseinrichtung (14) eingegeben wird, zu dem dritten Code aufweist, wobei der weitere Lese/Schreib-Speicher (80) durch die Bits des zweiten Felds (AHIGH) unter Ausschluß des niederstwertigen Bits (A05) adressiert wird.

8. Ein Speicher nach Anspruch 7, mit folgenden Merkmalen:
einem Register (110) zum Speichern eines Auswahlcodes (NOINT), der ein Modul, das nicht in Paaren zugeordnet ist, auswählt, und einer Einrichtung (99, 113) zum Eingeben des Auswahlcodes (NOINT), der ein Modul, das nicht in Paaren zugeordnet ist, auswählt, in den Decodierer (100); und
einer Einrichtung (112) zum selektiven Eingeben eines Bits (A5M) des Moduladreßfelds, das durch den Lese/Schreib-Speicher erzeugt wird, oder des niederstwertigen Bits (A05) des zweiten Felds (AHIGH) in die zweiten Schaltungseinrichtung (6).

## Revendications

1. Mémoire (3) à niveau d'imbrication variable comportant des modules de stockage (11-13) adressables, indépendamment, prévus en un nombre compris entre 1 et un maximum, chaque module (11-13) ayant une capacité variable égale à un multiple d'une capacité de base d'un bloc de mémoire,
un moyen (5) destiné à stocker une adresse (ADR) pour identifier une entrée de la mémoire (3), l'adresse (ADR) comprenant une première zone (ALOW) de bits d'adresse de mémoire les moins significatifs de poids croissant d'une façon ordonnée, une deuxième zone (AHIGH) de bits d'adresse de mémoire les plus significatifs de poids décroissant de façon ordonnée, et une troisième zone (AMID) de bits d'adresse de mémoire intermédiaires,
un premier moyen à circuit (14) prépositionné avec une information corrélée avec le nombre des modules (11-13), la capacité de chaque module (11-13) et un niveau d'imbrication souhaité, le premier moyen à circuit (14) ayant des entrées destinées à recevoir la première zone (ALOW) et la deuxième zone (AHIGH), et ayant des sorties destinées à fournir, conformément à l'information prépositionnée, la première zone reçue (ALOW) et la deuxième zone reçue (AHIGH), un signal de sélection de module à partir d'une pluralité de signaux de sélection (SEL1-SEL8) de modules et une zone (MBIT) d'adresses de modules, aucun des bits de la première zone (ALOW), si aucune imbrication n'est souhaitée, ou au moins l'un des bits de la première zone (ALOW), conformément au niveau d'imbrication souhaitée, contribuant à définir le signal de sélection de module, l'au moins un bit de la première zone (ALOW) étant remplacé par des bits correspondants de la deuxième zone (AHIGH) pour contribuer à définir la zone (MBIT) d'adresses de modules, et
un second moyen à circuit (6) recevant la troisième zone (AMID) et la zone (MBIT) d'adresses de modules pour l'adressage de l'entrée dans un module (11-13) sélectionné par ledit signal (SEL1-SEL8) de sélection de module.

2. Mémoire selon la revendication 1, dans laquelle lesdits modules (11-13) ont des capacités différentes, au moins l'un desdits modules ayant une capacité égale à un minimum, un autre desdits modules ayant une capacité multiple dudit minimum.

3. Mémoire selon la revendication 1 ou 2, dans laquelle ledit premier moyen à circuit (14) comporte :
une mémoire (15) de lecture/écriture adressée par lesdites première (ALOW) et deuxième (AHIGH) zones pour délivrer en sortie un premier code (MODSEL) de sélection de module et un deuxième code (BITSEL) de sélection de bit d'adresse de module ;
un décodeur (17) connecté à ladite mémoire (15) pour recevoir ledit premier code de sélection (MODSEL) et décoder ledit premier code (MODSEL) en l'un de ladite pluralité de signaux (SEL1-SEL8) de sélection de module ; et
un troisième moyen de circuit (18) commandé par ledit deuxième code (BITSEL) et appliqué en entrée à ladite première zone (ALOW) et à au moins une partie de ladite deuxième zone (AHIGH) pour générer ladite zone (MBIT) d'adresses de modules.

4. Mémoire selon la revendication 1 ou 2, dans laquelle ledit premier moyen (14) à circuit comporte :
une autre mémoire (53) de lecture/écriture adressée par ladite deuxième zone (AHIGH) pour délivrer en sortie un premier signal (HIGHINT), un troisième code (INT.L) représentant un niveau d'imbrication associé à ladite deuxième zone (AHIGH) pour un premier niveau dudit premier signal (HIGHINT) et représentant un code de sélection de module pour un deuxième niveau dudit premier signal (HIGHINT) ;
une pluralité de registres (54-65), associés chacun à un niveau d'imbrication prédéterminé pour stocker un code de sélection de module associé audit niveau prédéterminé ;
un premier moyen de sélection (66-69) commandé par au moins une partie de ladite première zone (ALOW, A23, A24) afin de sélectionner l'un desdits registres (54-65) parmi une pluralité de registres associés au même niveau prédéterminé d'imbrication ;
un deuxième moyen de sélection (70) commandé par ledit troisième code (INT.L) pour sélectionner l'un des registres (54-65) sélectionnés par ledit premier moyen de sélection (66-69) ;
un décodeur (74, 100) connecté audit deuxième moyen de sélection (70) et à ladite autre mémoire de lecture/écriture (53) pour recevoir un code de sélection stocké dans l'un desdits registres (54, 65), ledit troisième code (INT.L) et ledit premier signal (HIGHINT), et pour décoder lesdits codes reçus en l'un de ladite pluralité de signaux (SEL1-SEL8) de sélection de module ; et
un troisième moyen à circuit (75, 71, 72, 73) commandé par ledit troisième code (INT.L) et ledit premier signal (HIGHINT) et appliqué en entrée à ladite première zone (A22, A23, A24) et à au moins une partie de ladite deuxième zone (A04, A03, A02) pour générer une première partie de ladite première zone (MBIT) d'adresse de module.

5. Mémoire selon la revendication 4, dans laquelle ladite autre mémoire de lecture/écriture (53) génère une deuxième partie (A3M, A4M) de ladite zone (MBIT) d'adresse de module.

6. Mémoire selon la revendication 4, dans laquelle ladite pluralité de modules (103-105) est constituée sous forme de paires de modules associés (M1A, M1B-MNA, MNB) et ladite pluralité de registres (81, 94) stocke un code de sélection d'une paire de modules associés, ladite mémoire comprenant un moyen (99, 100) de formation d'un code de sélection de module par l'association du bit de moindre poids dans ladite première zone (ALOW) avec lesdits codes de sélection de paires.

7. Mémoire selon la revendication 6, dans laquelle ledit troisième code (INT.L) pour ledit second niveau dudit premier signal (HIGHINT) représente un code de sélection d'une paire de modules associés, comprenant un moyen (100) de formation du code de sélection de module par l'association du bit de moindre poids (A05) dans ladite deuxième zone (AHIGH) appliqué en entrée audit premier moyen à circuit (14) avec ledit troisième code, ladite autre mémoire de lecture/écriture (80) étant adressée par les bits de ladite deuxième zone (AHIGH) à l'exclusion dudit bit de moindre poids (A05).

8. Mémoire selon la revendication 7, comportant un registre (110) destiné à stocker un code de sélection (NOINT), sélectionnant un module non associé en paires, et un moyen (99, 113) pour l'entrée dudit code de sélection (NOINT) sélectionnant un module non associé en paires audit décodeur (100) ; et
un moyen (112) pour l'entrée sélective dans ledit deuxième moyen à circuit (6) d'un bit (A5M) de ladite zone d'adresse de module généré par ladite mémoire de lecture/écriture ou dudit bit de moindre poids (A05) de ladite deuxième zone (AHIGH).
